# EUROPEAN PATENT SPECIFICATION

(11) **EP 2 942 597 B1**
(45) Date of publication and mention of the grant of the patent: **30.09.2020**
(21) Application number: 15166490.1
(22) Date of filing: 06.05.2015
(51) Int. Cl.: F41G 3/14, F41H 11/02, G01S 13/34, G01S 13/86

(54) **AN ACTIVE PROTECTION SYSTEM**
AKTIVSCHUTZSYSTEM
SYSTEME DE PROTECTION ACTIVE

(30) Priority: 07.05.2014 PL 40813114
(43) Date of publication of application: 11.11.2015
(73) Proprietor: Wojskowa Akademia Techniczna, 00-908 Warszawa (PL)
(72) Inventor: Mierczyk, Zygmunt, 01-367 Warszawa (PL); Kawalec, Adam, 01-756 Warszawa (PL); Niezgoda, Tadeusz, 01-479 Warszawa (PL); Stec, Bronislaw, 01-493 Warszawa (PL); Trebinski, Radoslaw, 01-476 Warszawa (PL); Leciejewski, Zbigniew, 01-481 Warszawa (PL); Gawlikowski, Andrzej, 01-833 Warszawa (PL); Knysak, Piotr, 05-123 Chotomow (PL); Kupidura, Przemyslaw, 03-075 Warszawa (PL); Mlodzianko, Andrzej, 03-721 Warszawa (PL); Ostrowski, Roman, 01-479 Warszawa (PL); Panowicz, Robert, 05-083 Wojcieszyn (PL); Rutkowski, Adam, 01-496 Warszawa (PL); Surma, Zbigniew, 01-493 Warszawa (PL); Susek, Waldemar, 01-496 Warszawa (PL); Wojtanowski, Jacek, 05-800 Pruszkow (PL); Zahor, Miroslaw, 03-986 Warszawa (PL); Zygmunt, Marek, 01-476 Warszawa (PL); Kedzierski, Piotr, 82-310 Elblag (PL)
(74) Representative: Kancelaria Eupatent.pl Sp. z.o.o

(56) References cited:
- EP-A1- 1 605 225
- US-A- 4 765 244
- US-A- 6 137 436
- US-A1- 2006 028 373
- US-A1- 2010 278 387
- US-A1- 2011 127 328
- US-A1- 2014 102 288
- US-B1- 6 621 764

## Description

### TECHNICAL FIELD

The object of the present invention is an active protection system, designed for destruction or neutralization of a threat, the threat being guided and non-guided missiles with shaped charge warheads.

### BACKGROUND

One of significant threats on a modern, asymmetric battlefield, in addition to improvised explosive devices, are missiles with shaped charge warheads, such as shoulder-fired, anti-tank, non-guided rockets launched from rocket propelled grenade launchers.

The efficiency of such weapon, combined with its accessibility, has led to development of solutions aimed at providing defense, against such threat, for light armored vehicles, armored personnel carriers as well as tanks.

The currently used armors can be classified as passive, reactive or active.

The passive armors may be homogenous, multilayered or slat armors. The reactive armors are designed to reduce the effect of the shaped charge jet. The bar armors are used to damage or short circuit a detonator, to cause explosion of a projectile at a distance from a target or alternatively to deform the shaped charge liner or projectile's case.

The active armors are designed to launch, towards the projectile, a counter-projectile or a cloud of fragments in order to invoke early detonation of the attacking projectile or its neutralization.

A US patent application US20090173250 discloses a system for protection against missiles. The system is designed to destroy enemy missiles and rockets, especially anti-tank grenades. The system, in a first step, identifies a shot fired with a use of sensors, which determine position and distance of the incoming projectile. The detection may be effected by means of infrared sensors, radar or cameras. Then, there is fired, from the protected target (e.g. a building or a vehicle), a cloud of non-lethal pellets in the direction of the threat.

A US patent US5661254 discloses a system for protecting a target from missiles. The system consists of at least one launcher, having at least one barrel, adapted to throw fragmenting projectiles, mounted on an adjustable base. A sensors system is designed to detect a projectile and direct the launcher in that direction. Each missile contains special fragments, explosive and a fuse that controls the initiation of detonation. An example of sensor for detection and tracking of the attacking missile, is a high-resolution, impulse Doppler radar.

A US patent US7114428 discloses a sensor system for use in an active armor. The system consists of an infrared sensor for detecting a presence of a missile, a laser proximity sensor detecting the missile's position and Doppler radar in order to allow identification of the threat by measuring speed. The sensors system is provided in a housing comprising a segmented, spherical window, segments of which have filter characteristics corresponding to the various sensors.

A German patent application DE4008395 discloses a measurement system for an active armor. The system allows to determine a flight path of a fast moving object. At least three sensors are positioned as far away from each other as possible. The sensors are Doppler radars, each of which emits a signal in one direction with a constant frequency. Each sensor receives data allowing to determine radial velocity of the moving object and passes it for further processing. During each processing of the received signals there is used a phase difference between the signal sent by the sensor and a signal reflected from the moving object, thereby determining the radial velocity. The calculated radial velocities from the individual sensors, are sent to a computer determining location. From multiple and synchronous measurements of radial velocities there are obtained equations allowing to determine all the unknowns required to determine a flight path of the fast moving object.

A US patent application US2011127328 discloses a system and method for dual-band detection of incoming threats using an initial passive detection system and a selectively activated active detection system. Advantages include improved threat detection accuracy, reduction of false alarms, and reduced radiation emission from the active system, thereby making the active system more difficult to detect and reducing irradiation levels of users and bystanders. Variations include systems employing passive optical or electro-optical detectors, systems employing active RADAR or LADAR detectors, and systems connected to alarm signal/threat mitigation systems. The system may be configured for use on ground vehicles or small watercraft. Variations of the system may be specifically configured to detect incoming munitions launches.

A European patent application EP1605225A1 discloses a sensor system for defending armoured vehicles against projectiles through the use of active armour. A thermal sensor detects a projectile's presence, and a laser proximity sensor determines its location. A doppler sensor distinguishes between threatening and nonthreatening projectiles by measuring the projectile's velocity. The sensors are postioned in a housing with a segmented spherical window, wherein each sensor can detect the projectile through a window segment having a filtering characteristic which is matched to its associated sensor.

There is a need to provide an active protection system having increased efficiency of operation, which would be difficult to detect by an enemy.

### SUMMARY

The present invention relates to an active protection system according to the appended claims.

### BRIEF DESCRIPTION OF THE DRAWINGS

These and other objects of the invention presented herein, are accomplished by providing an active protection system. Further details and features of the present invention, its nature and various advantages will become more apparent from the following detailed description of the preferred embodiments shown in a drawing, in which:
Fig. 1 shows a block diagram of the active protection system;
Fig. 2 shows the active protection system installed on a vehicle;
Figs. 3 shows a passive, omnidirectional, optoelectronic, infrared head with marked observation zones in vertical and horizontal axes;
Fig. 4 shows a round of ammunition having a fragmenting projectile; and
Fig. 5 shows a directed fragmentation warhead.

### DETAILED DESCRIPTION

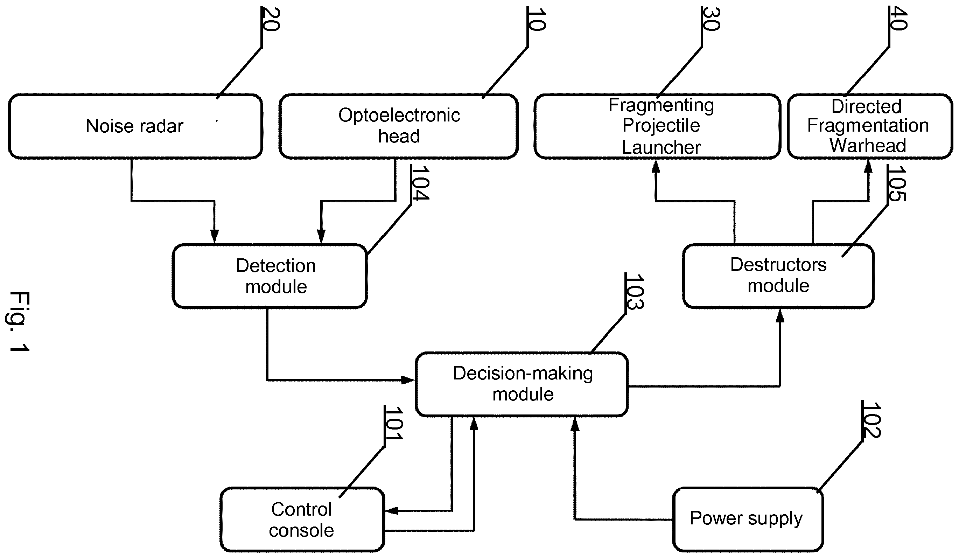

Fig. 1 shows a block diagram of the active protection system. The active protection system, configured to destroy missiles with shaped charge warheads, comprises detection module 104, a decision-making module 103, a destructors module 105.

The detection module 104 provides information, on a potential threat, to the decision-making module 103, which by processing the data identifies a target and defines a moment of invoking different destructors 105. After determining that the detected threat is a missile having a shaped charge warhead, the decision-making 103 module transmits a signal to invoke the destructors module 105, the task of which is to neutralize the threat.

Detection of a projectile is effected by means of an omnidirectional, passive, optoelectronic, infrared head that determines presence of the projectile as well as its position based on infrared radiation emitted by the moving projectile that is heated due to movement resistance.

The optoelectronic head comprises sensors positioned on a circumference of a circle thereby facilitating threat detection around the protected object. Each sensor operates in zones by monitoring infrared radiation emitted by projectiles present in the zones.

Time of presence in a given zone allows for determining speed and position of objects. Additionally, there is measured strength of the emitted signal. Equipping the optoelectronic infrared head with a broadband filter, passing electromagnetic radiation having wavelength of 3 to 5,5 µm, prevents system activation by stimuli not being high explosive anti-tank rounds while being present on a battlefield.

The presented range matches infrared radiation of entities heated to a temperature resulting from movement resistance, while flying at speeds corresponding to typical speeds of missiles with shaped charge warheads.

The detection module 104 provides a signal to a decision making module 103, which, based on object's speed and on radiation power emitted by the object, determines whether the monitored object may be a missile with a shaped charge warhead and basing on that takes a decision regarding invoking the destructors module 105.

Providing the detection module 104 with an additional broadband, difficult to detect, noise radar having very low level (1-10mW) of emitted power, increases efficiency of the active protection system by increasing probability of target detection.

The noise radar detects objects by transmitting, towards objects, a random or pseudo random radio signal and receives echo signals. The radar defines observation zones, around the protected object(s), breach of which is registered. Further, speed of object(s) is determined for an object entering a given zone. The noise radar is characterized by a low spectral density of the probing signal, which results on low probability of its detection on a battlefield.

Providing the detection module 104 with an optoelectronic ultraviolet sensor, allows for detecting missile launch and initiate and arm the remaining modules of the system and keep them in an active state. Detecting a missile launch with a use of an optoelectronic ultraviolet sensor, for example "solar-blind", is beneficial due to limited natural sources of ultraviolet radiation having wavelength below 0,29 µm, which reduces chances of an erroneous detection of a missile with shaped charge warhead.

The use of the destructors 105 comprising a fragmenting projectile launcher 30 and a directed fragmentation warhead 40 increases the probability of elimination of a threat, which is the attacking anti-tank missile. The launched fragmenting missile neutralizes threats present in a zone further away from the protected object while the directed fragmentation warhead 40 damages the projectile in a close zone. The use of both destructors for the same threat increases the effectiveness of the active protection system.

A round of fragmenting ammunition fired from a launcher, comprises a case having a two-chamber launching arrangement, bottom of the projectile, a projectile body, a cover, a connecting rod, elements to be fired and a spacer. The fragmenting projectiles are fired from a launcher having rifled barrels, which facilitates radial velocity.

The spacer rigidly connected to the bottom of the projectile body, facilitates a vortex movement of the elements to be fired, which results in their scattering after leaving the barrel thereby increasing probability of neutralizing of a threat. In case the spacer is not present, the elements to be fired are engaged in vortex movement by friction between them and the body as well as the bottom of the projectile, whereas the radial velocity thus achieved, does not facilitate sufficient scattering.

Equipping the fragmenting round of ammunition with a two-chamber launching system, reduces the maximum pressure of powder gases and prolongs its rise time, making fragmentation projectile launcher design more compact and lighter.

The use of the elements to be fired, from the directed fragmentation warhead 40, having a cylindrical shape and having sharp edges wherein the ratio of height to diameter of the element is 1,5 to 2 allows for damaging the attacking anti-tank missile. The proposed shape and size of the element to be fired, results in that its movement, caused by detonation of the cassette, is a combination of a forward and rotational motion, which, together with sharp edges, causes cutting of the components of shaped charge missiles thereby increasing probability of their destruction or neutralization.

A microwave sensor emits and receives electromagnetic waves thereby detecting changes in their reflections caused by movement of an object in the area of detection. The sensor has low power, its average value is 40 - 60mW, and thus may identify objects in proximity to the protected object, which facilitates required precision of determining position of a missile comprising a shaped charge warhead.

A use of a microwave, proximity fuse as a detonator of the directed fragmentation warhead 40 increases its efficiency by selection of an appropriate moment of detonation initiation.

The proximity detonator is released by the decision making module 103 after determining presence of a threat by the detection module 104, which protects from accidental detonation of the directed fragmentation warhead 40.

Low power of the sensor prevents its detection by reconnaissance means. Application of a microwave, proximity sensor allows limiting the number of used directed fragmentation warheads in case of a single threat.

The solution according to the present invention comprises an omnidirectional, passive, optoelectronic, infrared head 10 with a broadband band-pass electromagnetic radiation filter for wavelengths from 3 to 5,5 µm. This results in decrease of false alarms and increases efficiency of system operation while making it difficult to detect object equipped with said active protection system.

The omnidirectional, passive, optoelectronic, infrared head 10 determines position of a threat based solely on infrared radiation therefore it is not detectable. Application of the broadband filter, in the optoelectronic head, prevents classification as a threat of an object that emits infrared radiation different from infrared radiation emitted by typical missiles comprising shaped charge warheads.

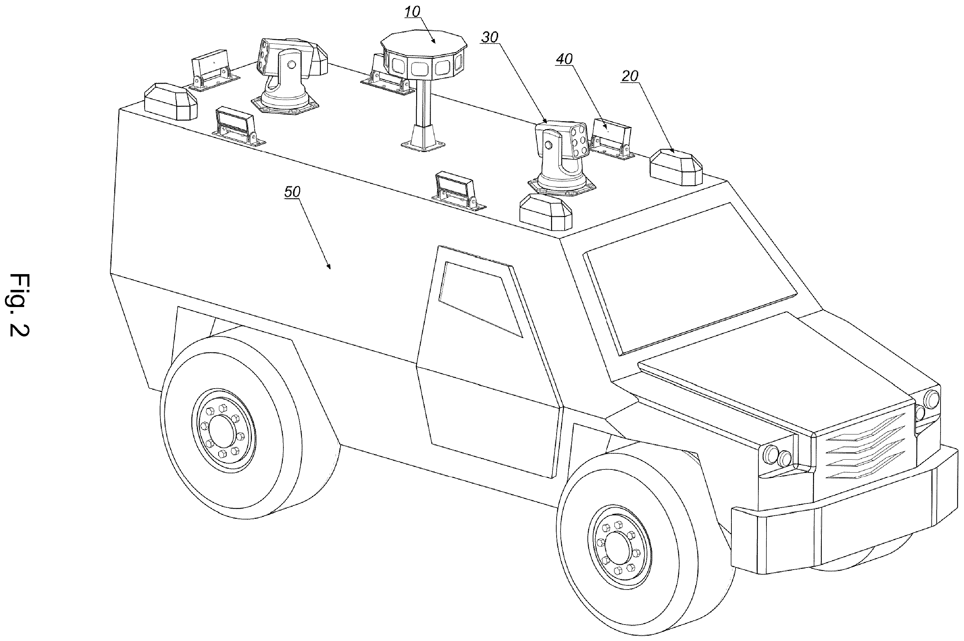

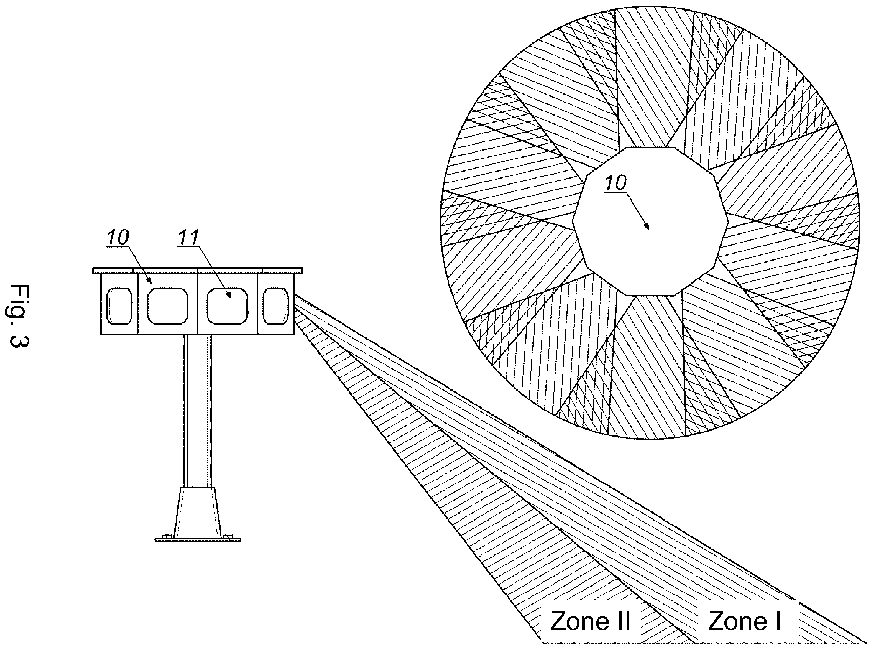

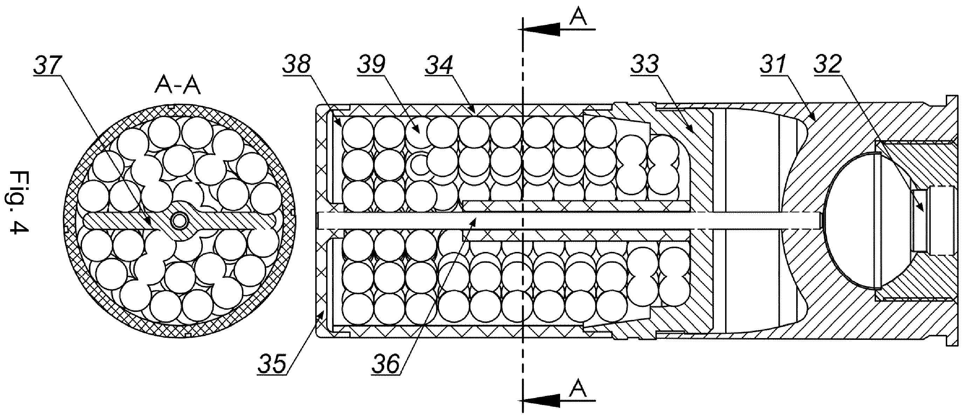

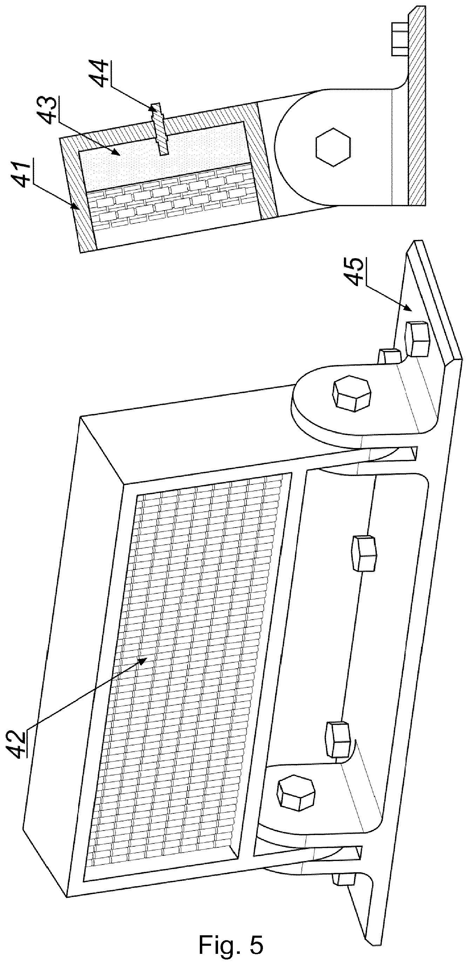

The present invention has been presented in preferred embodiments on a drawing in which Fig. 2 shows the active defense system installed on a vehicle; Figs. 3 shows a passive, omnidirectional, optoelectronic, infrared head with marked observation zones in vertical and horizontal axes; Fig. 4 shows a round of ammunition having a fragmenting projectile; and Fig. 5 shows a directed fragmentation warhead.

The active protection system comprises the detection module 104, the decision-making module 103, and the destructors module 105. The detection module 104 comprises the omnidirectional, passive, optoelectronic, infrared head 10 as well as the, difficult to detect, low emitted power noise radar 20.

The destructors module 105 comprises the fragmenting projectile launcher 30 and directed fragmentation warhead 40. The detection module 104 is responsible for threats detection. Based on gathered information, by the detection module 104, the decision making module 103 generates a command for possible launch of the destructors module 105.

A control console 101 allows to switch the system on and off, select its operation mode as well as test separate modules. Depending on the selected operation mode, the destructors module 105 is used when both the optoelectronic head 10 as well as the noise radar 20 identify a threat or when only one of the aforementioned devices 10, 20 identifies a threat.

The omnidirectional, passive, optoelectronic, infrared head 10 is integrated with a missile launch sensor that is an optoelectronic ultraviolet sensor, for example "solar-blind" sensor.

The missile launch sensor detects the moment of launch as well as a direction, from which an anti-tank grenade has been launched. The range of the sensor is 2-3km. The sensor is based on detection of ultraviolet radiation emitted during launch of an anti-tank missile with shaped charge warhead, the radiation having a wavelength below 0,29µm, which makes the sensor immune to solar radiation reaching the Earth as well as typical weather conditions such as lightning.

Detection of a missile launch allows to alert other system elements and direct fragmenting projectile launcher 30 towards the threat.

The detection of a missile and determining its position is effected with a use of the omnidirectional, passive, optoelectronic, infrared head 10 as well as the, difficult to detect, low power noise radar 20.

The omnidirectional, passive, optoelectronic, infrared head 10 comprises preferably ten optoelectronic sensors 11 positioned on a circumference of a circle, which allows for observation around the protected vehicle 50. Each optoelectronic sensor, monitors infrared radiation in at least two zones, thereby defining presence duration of a radiation source in each zone and corresponding radiation power. Operation in two zones allows to eliminate false alarms, as in case of explosions and other impulses within the detection range, a signal will appear at the same time in two zones. Moreover, by analyzing the signals from two zones it is possible to determine the speed of object passing through the zones and eliminate the signals with unexpected values. More zones can be utilized to increase accuracy of the system.

Based on duration of presence of a radiation source in a given zone, there is calculated its speed. If object's speed and radiation power in each zone is characteristic to anti-tank missiles with shaped charge warheads, then there is send appropriate information, to the decision-making module 103, regarding threat detection and its position.

The optoelectronic head 10 is of a passive type, which means that it is not detectable by enemy's reconnaissance means. The optoelectronic sensors comprise broadband band-pass electromagnetic radiation filters for wavelengths from 3 to 5,5 µm.

The range of the monitored radiation corresponds to radiation of entities heated to temperature resulting from air resistance during movement at speeds typical for high explosive anti-tank missiles. The use of the filter limits erroneous detections and increases efficiency of the active protection system while also decreasing use of the destructors present on the protected object 50.

The second detection method comprises the use of a broadband, difficult to detect, low emitted power, noise radar 20. The noise radar 20 detects object(s) by transmitting, towards object(s), a random or pseudo random radio signal and receives echo signals.

The emitted probing signal is characterized by a wide spectrum and low spectral density of power. The noise radar defines observation zones, around the protected object(s), breach of which is registered. Further, speed of object(s) is determined for an object entering a given zone. In case the speed matches criteria assumed for a missile with shaped charge warhead, the decision-making module 103 receives information regarding detection of a threat and its position.

The probing signal has frequency in the K band range. The range of the noise radar 20 is 200m at 20cm resolution in distance. Low spectral density of power of the probing signal results in that probability of its detection is low.

Depending on operating mode, the decision making module 103, based on a single or repeated information regarding threat detection, sends a signal to initiate the destructors module 105.

From the fragmenting projectile launcher 30, directed towards the incoming anti-tank missile, there is launched a fragmenting projectile. The projectile of the fragmenting round comprises a case 31 having a two-chamber launching arrangement 32, bottom of the projectile 33, a body 34, a cover 35, a connecting rod 36, a spacer 37 and a chamber 38 filled with elements to be fired 39.

The two-chamber launching arrangement 32, of a fragmenting projectile, causes projectile throw while a rifling of the barrel creates a radial velocity. The use of the two-chamber launching arrangement 32 results in reduced maximum pressure of powder gases and prolongs its rise time, making fragmentation projectile launcher 30 design more compact.

The spacer 37 is rigidly connected with the rotating bottom of the fragmenting projectile 33 which causes motion of balls 39 filling the chamber of the fragmenting projectile 38. Applying radial velocity to the balls 39 increases their scattering after leaving the launcher 30, thereby causing increase of probability of neutralizing a threat. The fragmenting projectiles guarantee protection in a zone further away from the protected object.

The decision making module 103 passes a signal to the directed fragmentation warhead 40, the task of which is to destroy a high explosive anti-tank missile in a near zone (at vehicle's side) in case the missile is not destroyed by the fragmenting projectile in the further away zone. The directed fragmentation warhead 40 comprises a housing 41, elements to be fired 42, explosive 43, a microwave, proximity detonator 44 and a base 45.

The elements to be fired 42 are of cylindrical shape and have sharp edges wherein the ratio of height to diameter of the element is 1,5 to 2. The elements to be fired 42 are submerged in resin. Transmission of a signal the warhead 40 causes release of the microwave proximity detonator 44, which, after detection of an attacking anti-tank missile in the vicinity of the protected object 5, initiates explosion of the explosive 43 and throw of the cylinders 42.

Use of the microwave proximity detonator 44 increases efficiency of the warhead 40 by determining of position of the anti-tank missile with an accuracy allowing for throwing of the cylinders 42 at a time instant resulting in the greatest probability of its destruction.

Further, control of the decision making module 103 over the microwave proximity detonator 44, prevents from firing the directed fragmentation warhead 40 by objects not being missiles comprising anti-tank warheads. The cylinders 42, moving by forward and angular motion, cut elements of anti-tank grenades.

An adjustable positioning of the housing 41 of the directed fragmentation warhead 40 with respect to the base 45, allows for positioning the warhead 40 in a position preventing damage to the protected object 50.

The elements to be fired of both the fragmenting projectile as well as the directed fragmentation warhead 40, neutralize a threat by damaging the attacking anti-tank missile thereby prohibiting creation of a shaped charge jet or early detonation of the missile.

The active protection system, according to the present invention, may be applied for protection of stationary objects as well as non-stationary objects against missiles with shaped charge warheads.

## Claims

1. An active protection system configured to destroy guided and non-guided missiles with shaped charge warheads, the system comprising:
- a decision-making module (103);
- a destructors module (105); and
- a detection module (104) that comprises an omnidirectional, passive, optoelectronic head (10) with a broadband band-pass electromagnetic radiation filter, wherein the optoelectronic head (10) comprises sensors positioned on a circumference of a circle thereby facilitating threat detection around a protected object whereas each sensor is configured to operate in zones by monitoring infrared radiation emitted by projectiles present in the respective zones such that time of presence in a given zone allows for determining speed and position of the projectiles;
wherein the system is **characterized in that**:
- the omnidirectional, passive, optoelectronic head (10) is configured to work with infrared radiation and its broadband band-pass electromagnetic radiation filter is for wavelengths from 3 to 5,5 µm ;
- the destructors module (105) comprises a fragmenting projectiles launcher (30) and a directed fragmentation warhead (40) positioned on the protected object; and
- the launched fragmenting projectile (30) is configured to neutralize threats present in a further away zone from the protected object while a launched directed fragmentation warhead (40) is configured to damage the projectile in a near zone.

2. The system according to claim 1, **characterized in that** the detection module (104) comprises a broadband noise radar (20).

3. The system according to any of previous claims, **characterized in that** the detection module (104) comprises a missile launch sensor being an optoelectronic, ultraviolet solar-blind sensor.

4. The system according to any of previous claims, **characterized in that** a round of ammunition, having a fragmenting projectile, comprises a spacer (37) dividing a chamber (38) of elements to be fired (39).

5. The system according to any of previous claims, **characterized in that** a round of ammunition, having a fragmenting projectile, comprises a two-chambers launching arrangement (32).

6. The system according to any of previous claims, **characterized in that** the explosive directed fragmentation warhead (40) comprises a housing (41), an explosive (43), a detonator (44) and elements to be fired (42), wherein the elements to be fired are of a cylindrical shape and have sharp edges, wherein the ratio of height to diameter of the element is from 1,5 to 2.

7. The system according to claim 6, **characterized in that** the detonator (44) of the explosive directed fragmentation warhead (40) is a microwave proximity detonator.

8. The system according to any of previous claims, **characterized in that** the determined speed of the projectiles is used to eliminate signals with unexpected values.

## Patentansprüche

1. Aktives Schutzsystem, das für die Zerstörung von Lenkflugkörpern und ungelenkten Flugkörpern mit Hohlladungssprengköpfen, wobei das System folgendes umfasst:
- ein Entscheidungsmodul (103);
- ein Zerstörermodul (105); und
- ein Erkennungsmodul (104), das einen ungerichteten, passiven, optoelektronischen Kopf (10) mit einem Breitbandbandpassfilter für elektromagnetische Strahlung, wobei der optoelektronische Kopf (10) Sensoren umfasst, die an einem Umfang eines Kreises positioniert sind, wodurch die Bedrohungserkennung um ein geschütztes Objekt unterstützt wird, während jeder Sensor so gestaltet ist, dass er in Zonen betrieben wird, indem die von in den entsprechenden Zonen vorhandenen Projektilen emittierte Infrarotstrahlung überwacht wird, so dass durch die Präsenzzeit in einer bestimmten Zone die Geschwindigkeit und Position der Projektile bestimmt werden kann;
wobei das System **dadurch gekennzeichnet ist, dass**:
- der omnidirektionale, passive, optoelektronische Kopf (10) so gestaltet ist, dass er in Verbindung mit Infrarotstrahlung arbeitet, und wobei dessen Breitbandbandpassfilter für elektromagnetische Strahlung für Wellenlängen von 3 bis 5,5 µm vorgesehen ist;
- das Zerstörermodul (105) ein Abschussgerät (30) für Zerlegungsprojektile und einen gerichteten Zerlegungssprengkopf (40) umfasst, der an dem geschützten Objekt positioniert ist; und
- das abgeschossene Zerlegungsprojektil (30) für die Neutralisierung von Bedrohungen gestaltet ist, die in einer vom dem geschützten Objekt weiter entfernten Zone vorhanden sind, während ein abgeschossener gerichteter Zerlegungssprengkopf (40) für eine Beschädigung des Projektils in einer nahen Zone gestaltet ist.

2. System nach Anspruch 1, **dadurch gekennzeichnet, dass** das Erkennungsmodul (104) ein Breitband-Rauschradar (20) umfasst.

3. System nach einem der vorstehenden Ansprüche, **dadurch gekennzeichnet, dass** das Erkennungsmodul (104) einen Geschossabschusssensor umfasst, bei dem es sich um einen optoelektronischen UV-Solar-Blind-Sensor handelt.

4. System nach einem der vorstehenden Ansprüche, **dadurch gekennzeichnet, dass** Patronen mit einem Zerlegungsprojektil ein Abstandselement (37) umfassen, das eine Kammer (38) abzuschießender (39) Elemente teilt.

5. System nach einem der vorstehenden Ansprüche, **dadurch gekennzeichnet, dass** Patronen mit einem Zerlegungsprojektil eine Abschussanordnung (32) mit zwei Kammern umfassen.

6. System nach einem der vorstehenden Ansprüche, **dadurch gekennzeichnet, dass** der explosive gerichtete Zerlegungssprengkopf (40) ein Gehäuse (41) umfasst, einen Sprengstoff (43), einen Zünder (44) und abzuschießende Elemente (42), wobei die abzuschießenden Elemente eine zylindrische Form aufweisen und scharfe Kanten haben, wobei das Verhältnis von Höhe zu Durchmesser des Elements zwischen 1,5 und 2 liegt.

7. System nach Anspruch 6, **dadurch gekennzeichnet, dass** der Zünder (44) des explosiven gerichteten Zerlegungssprengkopfs (40) ein Mikrowellennäherungszünder ist.

8. System nach einem der vorstehenden Ansprüche, **dadurch gekennzeichnet, dass** die bestimmte Geschwindigkeit der Projektile verwendet wird, um Signale mit unerwarteten Werten zu eliminieren.

## Revendications

1. Système de protection actif configuré pour détruire des missiles guidés et non guidés avec des ogives à charge creuse, le système comprenant :
- un module de prise de décision (103) ;
- un module de destructeurs (105) ; et
- un module de détection (104) qui comprend une tête omnidirectionnelle, passive, optoélectronique (10) avec un filtre de rayonnement électromagnétique passe bande à large bande, la tête optoélectronique (10) comprenant des capteurs positionnés sur une circonférence d'un cercle, ce qui permet de faciliter la détection d'une menace autour d'un objet protégé, tandis que chaque capteur est configuré pour fonctionner dans des zones en surveillant le rayonnement infrarouge émis par des projectiles présents dans les zones respectives de telle sorte que le temps de présence dans une zone donnée permette de déterminer la vitesse et la position des projectiles ;
le système étant **caractérisé en ce que** :
- la tête omnidirectionnelle, passive, optoélectronique (10) est configurée pour fonctionner avec un rayonnement infrarouge et son filtre de rayonnement électromagnétique passe bande à large bande est pour des longueurs d'onde allant de 3 à 5,5 µm ;
- le module de destructeurs (105) comprend un lanceur de projectiles de fragmentation (30) et une ogive de fragmentation dirigée (40) positionnée sur l'objet protégé ; et
- le projectile de fragmentation lancé (30) est configuré pour neutraliser des menaces présentes dans une zone plus éloignée de l'objet protégé pendant qu'une ogive de fragmentation dirigée lancée (40) est configurée pour endommager le projectile dans une zone proche.

2. Système selon la revendication 1, **caractérisé en ce que** le module de détection (104) comprend un radar de bruit à large bande (20).

3. Système selon l'une quelconque des revendications précédentes, **caractérisé en ce que** le module de détection (104) comprend un capteur de lancement de missile qui est un capteur optoélectronique ultraviolet sans visibilité solaire.

4. Système selon l'une quelconque des revendications précédentes, **caractérisé en ce qu'**une cartouche de munitions, ayant un projectile de fragmentation, comprend un espaceur (37) divisant une chambre (38) d'éléments à tirer (39).

5. Système selon l'une quelconque des revendications précédentes, **caractérisé en ce qu'**une cartouche de munitions, ayant un projectile de fragmentation, comprend un agencement de lancement à deux chambres (32).

6. Système selon l'une quelconque des revendications précédentes, **caractérisé en ce que** l'ogive de fragmentation dirigée explosive (40) comprend un boîtier (41), un explosif (43), un détonateur (44) et des éléments à tirer (42), les éléments à tirer étant d'une forme cylindrique et ayant des bords aiguisés, le rapport de hauteur sur diamètre de l'élément étant de 1,5 à 2.

7. Système selon la revendication 6, **caractérisé en ce que** le détonateur (44) de l'ogive de fragmentation dirigée explosive (40) est un détonateur de proximité à micro-ondes.

8. Système selon l'une quelconque des revendications précédentes, **caractérisé en ce que** la vitesse déterminée des projectiles est utilisée pour éliminer des signaux ayant des valeurs inattendues.
